# DEMANDE DE BREVET EUROPEEN

(11) **EP 0 880 292 A1**
(43) Date de publication de la demande: **25.11.1998**
(21) Numéro de dépôt: 98460012.2
(22) Date de dépôt: 13.05.1998
(51) Int. Cl.: H04Q 3/00

(54) **Génération et d'exploitation automatique d'une base de données de gestion d'un réseau de télécommunication**

(30) Priorité: 22.05.1997 FR 9706507
(71) Demandeur: Societé Francaise du Radiotéléphone SRF, 92915 Paris la Défence (FR)
(72) Inventeur: d'Hoop, Charles-Antoine, 92400 Courbevoie (FR)
(74) Mandataire: Vidon, Patrice

(57) **Abrégé**

L'invention concerne un système de génération et d'exploitation automatique d'une base de données de gestion et/ou de maintenance (6) d'un réseau de télécommunication, du type comprenant une pluralité de machines (1₁ à 1_{N}) ayant chacune une interface de signalisation CCITT n° 7 et étant chacune associée à une base de données de configuration (2₁ à 2_{N}) stockant, selon un formalisme spécifique, des données correspondant à des informations descriptives de la machine et de ses connexions.

Selon l'invention, le système comprend : des moyens (3, 5) de transcodage et d'intégration d'au moins une des bases de données de configuration, de façon à créer la base de données de gestion et/ou de maintenance, les moyens (3) de transcodage permettant de transformer les données stockées selon un formalisme spécifique en des données disponibles selon un formalisme générique prédéterminé, et les moyens (5) d'intégration permettant de regrouper, selon un motif élémentaire de description de réseau, au moins certaines des données disponibles selon un formalisme générique prédéterminé ; et des moyens (7) d'extraction et de présentation, selon au moins un type d'information descriptive prédéterminé, de certaines des données stockées dans la base de données de gestion et/ou de maintenance (6).

## Description

Le domaine de l'invention est celui des réseaux de télécommunication, et plus précisément de la gestion et/ou de la maintenance de tels réseaux.

On rappelle qu'un réseau de télécommunication comprend des noeuds, qui sont des machines (communément appelés autocommutateurs), et des mailles, qui sont des faisceaux reliant les machines entre elles. Un faisceau comprend par exemple un ou plusieurs liens MIC à 2 Mbit/s, présentant chacun une structure de trame à 32 intervalles de temps, chaque intervalle de temps correspondant à une voie à 64 kbit/s.

La présente invention s'applique à de nombreux types de réseaux et notamment, mais non exclusivement, au réseau téléphonique public commuté (RTPC), au réseau numérique à intégration de services (RNIS), ou encore aux réseaux de radiocommunication cellulaire (tels que le GSM 900 ou le DCS 1800 par exemple).

D'une façon générale, la présente invention s'applique à tout type de réseau de télécommunication comprenant une pluralité de machines ayant chacune une interface de signalisation CCITT n° 7. On rappelle que le système de signalisation CCITT n° 7 est un système de signalisation par canal sémaphore utilisé dans les réseaux de télécommunication modernes. Chaque machine est dans ce cas définie dans le réseau par un point sémaphore distinct.

Afin d'assurer un service de haute qualité à ses clients, l'exploitant d'un réseau de télécommunication doit disposer de services d'exploitation et de maintenance assurant deux fonctions principales, à savoir la collecte d'informations venant des noeuds de commutation (de façon à connaître l'état de fonctionnement des éléments du réseau) et la transmission de commandes vers les noeuds de commutation (de façon à reconfigurer des éléments du réseau pour assurer la continuité et la qualité du service).

Pour assurer ces services, l'exploitant dispose d'un réseau d'exploitation et de maintenance (également appelé réseau de gestion des télécommunications, ou TMN pour "Telecommunication Management Network" en langue anglaise) qui comprend des centres d'exploitation et de maintenance, s'interfaçant avec le personnel par l'intermédiaire de terminaux d'exploitation-maintenance, et des liaisons entre les centres d'exploitation et de maintenance et les différents éléments du réseau (pour la collecte d'informations et la transmission de commandes). Généralement, le réseau d'exploitation et de maintenance est un réseau distinct du réseau de télécommunication. Par exemple, en France, le réseau d'exploitation et de maintenance du réseau téléphonique public commuté est le réseau X.25 de Transpac.

Pour que chaque machine du réseau de télécommunication puisse fonctionner et remplir toutes ses fonctions, il faut charger dans les mémoires de cette machine un ensemble de données qui lui sont spécifiques. Parmi ces données, on distingue généralement les données de configuration matérielle (désignation de toutes les entités matérielles présentes sur le site) et les données de configuration téléphonique (liste des abonnés, liste des faisceaux, liste des circuits, ...). Les techniciens d'exploitation et de maintenance saisissent ces données de configuration en passant des commandes de configuration (ou commandes relation homme-machine). Comme le réseau évolue en permanence (ajout ou suppression de machines, modification des faisceaux entre ces machines, ...), les techniciens d'exploitation et de maintenance rentrent fréquemment de nouvelles données de configuration dans les machines.

Chaque machine est donc associée à une base de données de configuration stockant, selon un formalisme spécifique, des données de configuration correspondant à des informations descriptives de cette machine, à savoir généralement sa topologie, son architecture CCITT n° 7, les protocoles qu'elle utilise, l'état des liens qu'elle gère, les ressources qu'elle utilise, etc.

On comprend que pour effectuer les fonctions d'exploitation et de maintenance de son réseau de télécommunication, l'exploitant doit avoir une connaissance aussi parfaite que possible de son réseau. Notamment, l'exploitant doit savoir combien de machines (ou équipements) sont mises en oeuvre dans son réseau, quel est leur type, comment elles sont reliées entre elles (constitution des faisceaux), les ressources qu'elles utilisent, les équipements qui leur sont associés, les différentes couches protocolaires définies sur chaque intervalle de temps des différents faisceaux, etc.

Traditionnellement, la seule représentation qu'un exploitant a de son réseau est basée sur des schémas que les techniciens d'exploitation et de maintenance établissent manuellement, en fonction des commandes de configuration qu'ils passent. En d'autres termes, les techniciens reportent manuellement sur des schémas toutes modifications apportées au réseau via le passage de commandes de configuration. On notera que ces modifications de schéma sont généralement effectuées a priori, c'est-à-dire sur le résultat supposé des commandes de configuration passées.

Malheureusement, avec les schémas actuels précités, l'exploitant ne dispose pas d'une image complète et exacte de son réseau de télécommunication, et les fonctions d'exploitation et de maintenance du réseau de télécommunication ne peuvent donc pas être effectuées de façon optimale.

Tout d'abord, les schémas actuels sont partiels. La plupart ne concernent qu'une machine. D'autres concernent plusieurs machines mais ne sont pas suffisament détaillés (notamment ils ne fournissent pas d'informations au niveau intervalle de temps). On comprend qu'il est diffficile d'établir manuellement, et dans des délais raisonnables, des schémas complexes.

En outre, la difficulté est accrue lorsque le réseau de télécommunication est un réseau hétérogène interconstructeur. En effet, dans ce cas, le formalisme spécifique selon lequel sont stockées les données de chaque base de données de configuration est un formalisme spécifique à chaque constructeur. Il existe donc différents languages constructeurs. Or, un même technicien d'exploitation et de maintenance ne peut maîtriser ces différents formalismes et les différents languages constructeurs correspondants, et est donc incapable de reporter sur un même schéma des informations concernant des machines de différents constructeurs.

Par ailleurs, les schémas actuels, supposés correspondre à la réalité, sont fréquemment erronés. En effet, des erreurs peuvent se produire aussi bien lors de la mise à jour manuelle des schémas que lors des passages de commandes de configuration par les techniciens. D'une façon générale, l'exploitant ne peut s'apercevoir d'une erreur sur un schéma que lorsqu'une alarme signalant cette erreur remonte à un centre d'exploitation et de maintenance, via le réseau d'exploitation et de maintenance.

L'invention a notamment pour objectif de pallier ces différents inconvénients de l'état de la technique.

Plus précisément, l'un des objectifs de la présente invention est de fournir un système et un procédé permettant à l'exploitant de disposer rapidement d'une image (par exemple sous forme de schémas et/ou de tableaux) complète et exacte de son réseau de télécommunication, de façon que les fonctions d'exploitation et de maintenance du réseau de télécommunication puissent être effectuées de façon optimale.

L'invention a également pour objectif de fournir de tels système et procédé qui permettent de calculer la charge admissible totale du réseau.

Un autre objectif de l'invention est de fournir de tels système et procédé qui ne nécessitent qu'un effectif réduit de techniciens d'exploitation et de maintenance.

Ces différents objectifs, ainsi que d'autres qui apparaîtront par la suite, sont atteints selon l'invention à l'aide d'un système de génération et d'exploitation automatique d'une base de données de gestion et/ou de maintenance d'un réseau de télécommunication, ledit réseau comprenant une pluralité de machines ayant chacune une interface de signalisation CCITT n° 7, chaque machine étant associée à une base de données de configuration stockant, selon un formalisme spécifique, des données correspondant à des informations descriptives de ladite machine, à savoir notamment sa topologie et/ou son architecture CCITT n° 7 et/ou les protocoles qu'elle utilise et/ou l'état des liens qu'elle gère et/ou les ressources qu'elle utilise,
caractérisé en ce qu'il comprend :
- des moyens de transcodage et d'intégration d'au moins une des bases de données de configuration, de façon à créer ladite base de données de gestion et/ou de maintenance, lesdits moyens de transcodage permettant de transformer lesdites données stockées selon un formalisme spécifique en des données correspondant également aux informations descriptives de la machine mais disponibles selon un formalisme générique prédéterminé, et lesdits moyens d'intégration permettant de regrouper, selon un motif élémentaire de description de réseau, au moins certaines desdites données disponibles selon un formalisme générique prédéterminé ;
- des moyens d'extraction et de présentation, selon au moins un type d'information descriptive prédéterminé, de certaines des données stockées dans ladite base de données de gestion et/ou de maintenance.

Le principe général de l'invention consiste à générer des représentations du réseau (schémas, tableaux ou tout autre type de représentation) à partir de données extraites d'une ou plusieurs bases de données de configurations associées chacune à une machine du réseau.

Plus précisément, l'invention consiste à générer (par transcodage puis intégration d'une ou plusieurs des bases de données de configuration) et exploiter (par extraction puis présentation de données) de façon automatique une base de données, dite de gestion et/ou de maintenance, contenant des informations descriptives d'une ou plusieurs machines du réseau, ces informations étant :
- disponibles selon un formalisme générique (et non pas spécifique à un type de machine) et
- regroupées selon un motif élémentaire de description de réseau.

De cette façon, on peut générer simplement et rapidement des représentations du réseau, ces représentations pouvant être détaillées ou globales selon les types d'informations descriptives retenus pour l'extraction et la présentation.

En outre, l'utilisation d'un formalisme générique pour la base de données de gestion et/ou de maintenance permet de simplifier le travail des techniciens d'exploitation et de maintenance. Notamment, dans le cas d'un réseau hétérogène interconstructeur, cela permet au technicien de prendre en compte des informations provenant de machines fournies par différents constructeurs, sans pour autant connaître les différents languages de programmation propres à ces constructeurs.

On notera également que, contrairement aux schémas actuels précités, les représentations que le système de l'invention permet d'établir ne peuvent pas être erronées puisqu'elles découlent directement (par transcodage puis intégration) des bases de données de configuration. En d'autres termes, il s'agit ici d'une construction de représentation a posteriori (sur le résultat réel des commandes de configuration passées) et non a priori (sur le résultat supposé des commandes de configuration passées).

Préférentiellement, ledit système comprend en outre une base de données transcodée associée à chaque base de données de configuration et stockant lesdites données disponibles selon le formalisme générique prédéterminé,
lesdits moyens de transcodage permettant le transcodage de chaque base de données de configuration en sa base de données transcodée associée,
lesdits moyens d'intégration permettant l'intégration d'au moins une des bases de données transcodées, en regroupant, selon ledit motif élémentaire de description de réseau, au moins certaines des données disponibles selon un formalisme générique prédéterminé, de façon à créer ladite base de données de gestion et/ou de maintenance.

De façon avantageuse, ledit motif élémentaire de description de réseau correspond à la définition d'une machine d'origine et d'une machine de destination, et du faisceau qui les relie.

Ce motif élémentaire, qui correspond à la définition d'un certain nombre d'informations descriptives, est utilisé par les moyens d'intégration pour regrouper les données de la base de données de gestion et/ou de maintenance. C'est lui qui permet une extraction selon au moins un type d'information descriptive.

Avantageusement, ledit motif élémentaire de description de réseau correspond en outre à la définition d'au moins une des informations suivantes :
- les caractéristiques de signalisation CCITT n° 7 (couches protocolaires 1 à 3) dudit faisceau qui relie lesdites machines d'origine et de destination ;
- les couches protocolaires 4 et suivantes définies sur chaque intervalle de temps porté par ledit faisceau ;
- l'état des intervalles de temps gérés par lesdites machines d'origine et de destination ;
- les ressources utilisées par lesdites machines d'origine et de destination ;
- les équipements associés auxdites machines d'origine et de destination.

Il est clair que plus le motif élémentaire définit d'informations descriptives, plus le nombre de représentations distinctes pouvant être construites est élevé.

Dans un mode de réalisation avantageux de l'invention, lesdits moyens d'extraction et de présentation comprennent des moyens de présentation des données extraites sous forme de schéma(s) et/ou de tableau(x) de base, éventuellement combinés entre eux.

Préférentiellement, le(s)dit(s) schéma(s) et/ou tableau(x) de base appartien(nen)t au groupe comprenant :
- un schéma et/ou un tableau selon un protocole donné d'une des couches protocolaires 1, 2 et 3 de la signalisation CCITT n° 7, faisant apparaître la topologie du réseau ;
- un schéma et/ou un tableau selon un protocole donné d'une des couches protocolaires 4 et suivantes, faisant apparaître les machines du réseau utilisant ledit protocole donné et les faisceaux correspondants ;
- un schéma et/ou un tableau des liaisons semi-permanentes du réseau ;
- un schéma et/ou un tableau de réseau entre deux machines données ;
- un schéma et/ou un tableau de réseau des machines connectées à une machine donnée ;
- un schéma et/ou un tableau de réseau par type de machine ;
- un schéma et/ou un tableau de réseau par constructeur ;
- un schéma et/ou un tableau de réseau par ancienneté de machine ;
- un schéma et/ou un tableau de réseau intelligent, faisant apparaître les machines à valeurs ajoutées ;
- un schéma et/ou un tableau de visualisation de trajets de signalisation dans le réseau.

Chaque schéma ou tableau de base correspond à une représentation du réseau selon une information descriptive distincte parmi celles définies dans le motif élementaire description de réseau. n est clair que plusieurs schémas et/ou tableaux de base peuvent être combinés entre eux.

De façon préférentielle, le(s)dit(s) schéma(s) et/ou tableau(x) de base fait(font) en outre apparaître au moins certaines des informations suivantes :
- pour chaque intervalle de temps :
   * son numéro logique, et/ou
   * le numéro d'identification de la carte contrôlant le lien MIC qui le supporte ;
   * un ou plusieurs des protocoles qu'il porte ;
   * l'état des équipements qui gèrent ledit intervalle de temps ;
- les machines pourvues d'un dispositif annuleur d'écho ;
- l'état (en panne ou non) de chaque lien MIC.

Ainsi, on fait apparaître plusieurs niveaux d'information sur une même représentation du réseau (schéma ou tableau).

Avantageusement, lesdits moyens d'extraction et de présentation comprennent des moyens de calcul de la charge admissible totale du réseau, en termes de nombre d'appels et/ou en termes de nombre d'intervalles de temps de parole, aux interfaces d'une couche protocolaire donnée, lesdits moyens de calcul extrayant de ladite base de données de gestion et/ou de maintenance le nombre total d'interfaces de ladite couche protocolaire donnée et disposant par ailleurs d'informations quant au nombre d'appels admissibles et/ou quant au nombre d'intervalles de temps de parole disponibles à chaque interface de ladite couche protocolaire donnée.

On utilise ici avantageusement le fait qu'il est possible à tout moment d'extraire de la base de données de gestion et/ou de maintenance le nombre total d'interfaces d'une couche protocolaire donnée.

Dans un mode de réalisation particulier de l'invention, ledit réseau de télécommunication est un réseau hétérogène interconstructeur, ledit formalisme spécifique selon lequel sont stockées les données de chaque base de données de configuration étant un formalisme spécifique à chaque constructeur.

La présente invention est notamment, mais non exclusivement, bien adaptée à l'exploitation et à la maintenance d'un réseau de radiotélécommunication numérique cellulaire (par exemple selon le standard GSM 900 ou DCS 1800).

L'invention concerne également un procédé de génération et d'exploitation automatique d'une base de données de gestion et/ou de maintenance d'un réseau de télécommunication, caractérisé en ce qu'il comprend les étapes suivantes :
- transcodage et intégration d'au moins une des bases de données de configuration, de façon à créer ladite base de données de gestion et/ou de maintenance, ledit transcodage consistant à transformer lesdites données stockées selon un formalisme spécifique en des données correspondant également aux informations descriptives de la machine mais disponibles selon un formalisme générique prédéterminé, et ladite intégration consistant à regrouper, selon un motif élémentaire de description de réseau, au moins certaines desdites données disponibles selon un formalisme générique prédéterminé ;
- extraction et présentation, selon au moins un type d'information descriptive prédéterminé, de certaines des données stockées dans ladite base de données de gestion et/ou de maintenance.

Avantageusement, ladite étape de transcodage et d'intégration comprend elle-même les étapes suivantes :
- transcodage de chaque base de données de configuration en une base de données transcodée associée, de façon que chaque base de données transcodée stocke lesdites données disponibles selon le formalisme générique prédéterminé ;
- intégration d'au moins une des bases de données transcodées, de façon à créer ladite base de données de gestion et/ou de maintenance, ladite intégration consistant à regrouper, selon ledit motif élémentaire de description de réseau, au moins certaines des données stockées dans au moins une des bases de données transcodées.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique d'un mode de réalisation particulier du système de l'invention ;
- la figure 2 présente un organigramme simplifié d'un mode de réalisation particulier du procédé de l'invention ; et
- la figure 3 présente un exemple de schéma partiel d'un réseau de radiotélécommunication numérique cellulaire de type GSM, obtenu de façon automatique grâce au système de la figure 1.

L'invention concerne donc un système et un procédé de génération et d'exploitation automatique d'une base de données de gestion et/ou de maintenance d'un réseau de télécommunication.

Par hypothèse, le réseau de télécommunication est du type comprenant une pluralité de machines 1₁ à 1_{N}, ayant chacune une interface de signalisation CCITT n° 7. Chaque machine 1₁ à 1_{N} est associée à une base de données de configuration 2₁ à 2_{N}. Chaque base de données de configuration 2₁ à 2_{N} stocke, selon un formalisme spécifique, des données correspondant à des informations descriptives de la machine base de données de configuration 2₁ à 2_{N} à laquelle elle est associée. Ces informations descriptives d'une machine concernent par exemple sa topologie, son architecture CCITT n° 7, les protocoles qu'elle utilise, l'état des liens qu'elle gère, les ressources qu'elle utilise, etc.

La présente invention s'applique notamment, mais non exclusivement dans le cas d'un réseau de radiotélécommunication numérique cellulaire, par exemple du type GSM 900 ou DCS 1800.

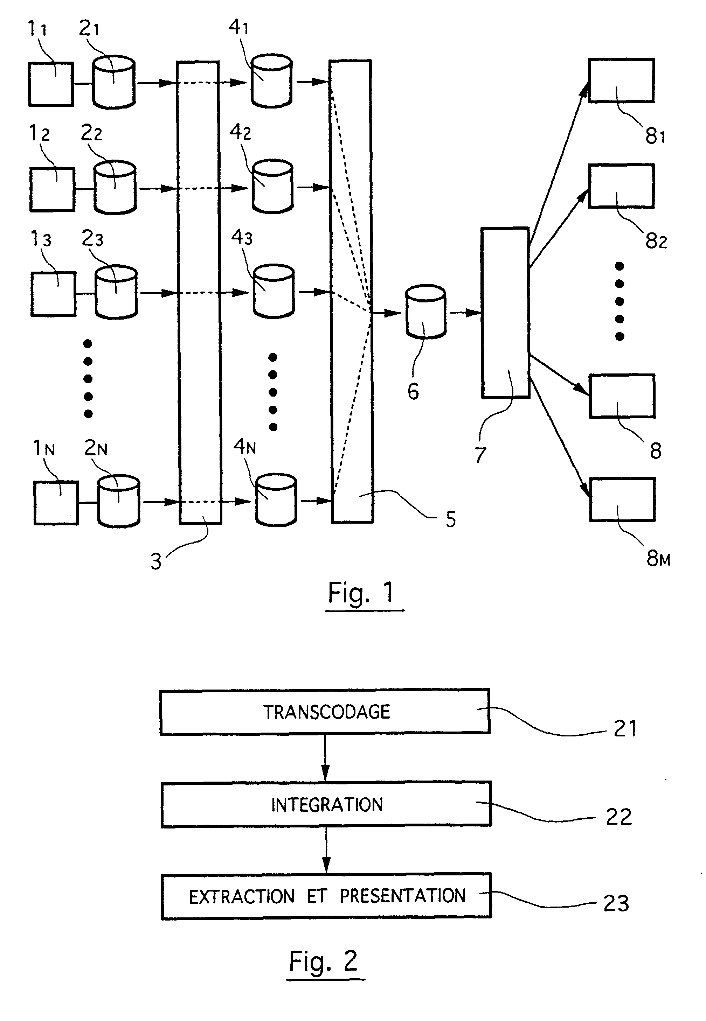

Comme présenté sur le synoptique de la figure 1, dans un mode de réalisation particulier, le système de l'invention comprend en outre des moyens 3 de transcodage, une pluralité de bases de données transcodée 4₁ à 4_{N}, des moyens 5 d'intégration et des moyens 7 d'extraction et de présentation.

Chaque base de données transcodée 4₁ à 4_{N} est associées à une des bases de données de configuration 2₁ à 2_{N}.

Les moyens 3 de transcodage permettent le transcodage de chaque base de données de configuration 2₁ à 2_{N} en sa base de données transcodée associée 4₁ à 4_{N}. Une base de données de configuration et sa base de données transcodée stockent les informations descriptives d'une même machine. Cependant, grâce au transcodage, les données d'une base de données transcodée sont disponibles selon un formalisme générique, commun à toutes les bases de données transcodées 4₁ à 4_{N}, alors que les données d'une base de données de configuration ne sont disponibles que selon un formalisme spécifique (et en général propre au constructeur de cette base de données de configuration).

Il convient de rappeler que généralement, et notamment avec un réseau hétérogène interconstructeur, chaque machine a son propre langage de définition du réseau ainsi que sa propre manière de définir les couches applicatives qu'elle gère. En d'autres termes, les données de chaque base de données de configuration sont stockées selon un formalisme spécifique à chaque constructeur.

Les moyens 3 de transcodage, en réalisant le passage d'un formalisme spécifique à un formalisme générique, permettent d'automatiser et de simplifier les tâches suivantes, et notamment l'intégration (cf explication détaillée ci-dessous).

La création d'un formalisme générique est possible du fait que toutes les machines 1₁ à 1_{N} possèdent une interface de signalisation CCITT n° 7. Ce formalisme générique peut par exemple s'appuyer sur un vocabulaire reprenant ou faisant référence à certains noms canoniques de la signalisation CCITT n° 7.

Les moyens 5 d'intégration permettent l'intégration d'une ou de plusieurs bases de données transcodées 4₁ à 4_{N}, de façon à créer la base de données de gestion et/ou de maintenance 6. Ces moyens 5 d'intégration regroupent, selon un motif élémentaire de description de réseau, au moins certaines des données d'une ou de plusieurs bases de données transcodées 4₁ à 4_{N}.

Le motif élémentaire de description de réseau correspond par exemple à la définition de :
- une machine d'origine et d'une machine de destination ;
- le faisceau qui relie ces machines d'origine et de destination ;
- les caractéristiques de signalisation CCITT n° 7 (couches protocolaires 1 à 3) du faisceau qui relie ces machines d'origine et de destination ;
- les couches protocolaires 4 et suivantes définies sur chaque intervalle de temps porté par le faisceau ;
- l'état des intervalles de temps gérés par ces machines d'origine et de destination ;
- les ressources, et notamment les cartes de contrôle des liens, utilisées par ces machines d'origine et de destination, ainsi que l'état d'activation des cartes précitées ;
- les équipements associés à ces machines d'origine et de destination ;
- ...

Il est clair que cette liste est donnée uniquement à titre d'exemple et n'est en aucune façon exhaustive. De même, le motif élémentaire de description de réseau peut correspondre à la définition de seulement certaines des informations descriptives de cette liste. Dans le cas le plus simple, le motif élémentaire peut ne correspondre qu'à la définition des machines d'origine et de destination et du faisceau qui les relie.

Les moyens 7 permettent d'extraire et de présenter, selon au moins un type d'information descriptive prédéterminé, certaines des données stockées dans la base de données de gestion et/ou de maintenance 6. La présentation se fait par exemple sous forme de schémas 8₁ à 8_{M} (cf liste ci-dessous), de tableaux ou encore de résultats de calcul (cf ci-dessous le calcul de la charge admissible totale du réseau).

On présente maintenant différents exemples de schémas de base. Il est clair que l'invention permet également de réaliser des tableaux de base présentant les mêmes informations. En outre, ces schémas de base peuvent être combinés entre eux, de façon à obtenir un schéma présentant plusieurs niveaux d'informations.

De façon non exhaustive, on peut citer les principaux schémas de base suivants :
- un schéma selon un protocole donné (MTP1, MTP2, MTP3) d'une des couches protocolaires 1, 2 et 3 de la signalisation CCITT n° 7, faisant apparaître la topologie du réseau ;
- un schéma selon un protocole donné (SCCP, TCAP, MAP/MSC, MAP/SMS, MAP/HLR, MAP/VLR, MAP/EIR, TUP, SSUTR2, ISUP, INAP) d'une des couches protocolaires 4 et suivantes, faisant apparaître les machines du réseau utilisant le protocole donné et les faisceaux correspondants ;
- un schéma des liaisons semi-permanentes du réseau ;
- un schéma de réseau entre deux machines données ;
- un schéma de réseau des machines connectées à une machine donnée ;
- un schéma de réseau par type de machine ;
- un schéma de réseau par constructeur ;
- un schéma de réseau par ancienneté de machine ;
- un schéma de réseau intelligent, faisant apparaître les machines à valeurs ajoutées ;
- un schéma de visualisation de trajets de signalisation dans le réseau ;
- ...

Tous les protocoles indiqués ci-dessus entre parenthèses sont ceux généralement utilisés dans un réseau de radiotélécommunication numérique cellulaire, par exemple du type GSM. Ils sont connus de l'homme de métier et ne sont donc pas décrits ci-dessous. Il est clair que la présente invention n'est pas limitée à cet ensemble de protocoles et peut aisément être mise en oeuvre par l'homme du métier avec d'autres protocoles.

Afin de fournir un maximum d'informations sur un même schéma, on peut aussi prévoir d'y faire apparaître des informations complémentaires, telles que :
- pour chaque intervalle de temps :
   * son numéro logique ;
   * le numéro d'identification de la carte contrôlant le lien MIC qui le supporte ;
   * un ou plusieurs des protocoles qu'il porte ;
   * l'état des équipements qui gèrent cet intervalle de temps ;
- les machines pourvues d'un dispositif annuleur d'écho ;
- l'état (en panne ou non) de chaque lieu MIC ;
- ...

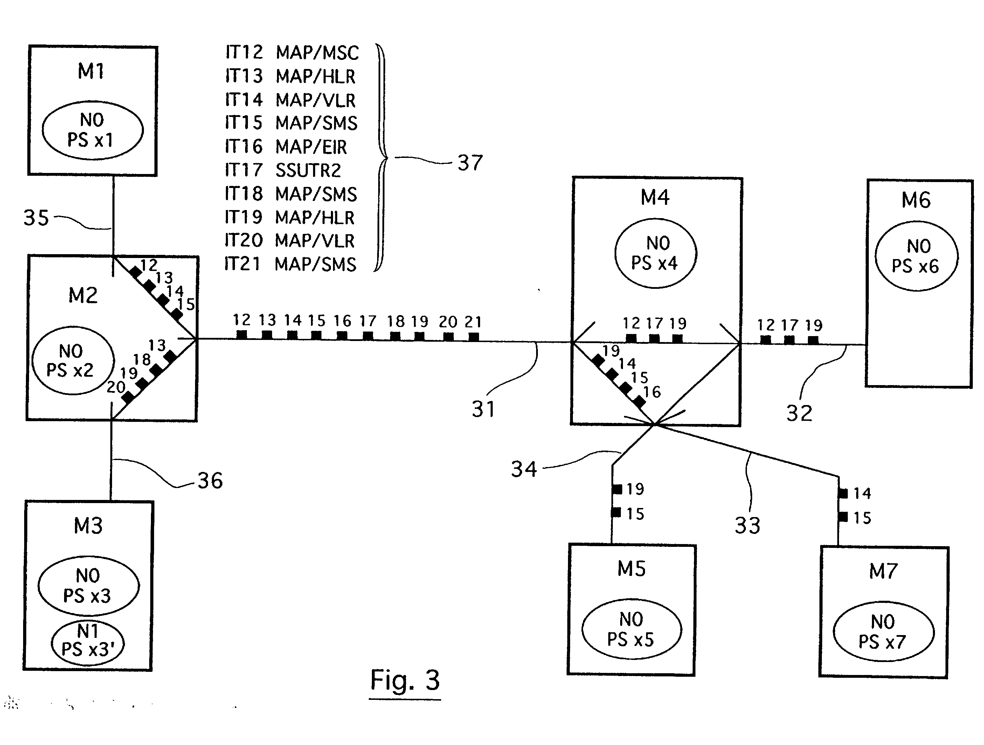

On présente maintenant, en relation avec la figure 3, un exemple de schéma partiel d'un réseau de radiotélécommunication numérique cellulaire de type GSM, obtenu de façon automatique grâce au système de la figure 1.

Cet exemple de schéma partiel fait apparaître plusieurs machines M1 à M7.

Pour chaque machine, il est notamment précisé son numéro de point sémaphore (par exemple PS x1 pour la machine Ml) et le type de réseau (national N0 ou local N1) auquel elle appartient.

Les faisceaux 31 à 36 entre ces machines apparaissent également, ainsi que certains intervalles de temps portés par ces faisceaux. Chaque intervalle de temps est représenté par un carré noir affecté en général d'un numéro correspondant au rang de cet intervalle de temps dans la structure de trame du lien MIC qui le supporte.

Dans une zone 37 du schéma, il est également indiqué, pour certains des intervalles de temps, l'un des protocoles portés.

Les moyens 7 d'extraction et de présentation peuvent également comprendre des moyens de calcul de la charge admissible totale C du réseau aux interfaces d'une couche protocolaire donnée. La charge admissible totale s'entend ici aussi bien en termes de nombre d'appels qu'en termes de nombre d'intervalles de temps de parole. Les moyens de calcul extraient de la base de données de gestion et/ou de maintenance 6 le nombre total N_{I} d'interfaces de la couche protocolaire donnée (par exemple la couche SSUTR2 ou BSS-MAP). On suppose par ailleurs qu'ils disposent d'informations quant au nombre d'appels admissibles N_{A} et/ou quant au nombre d'intervalles de temps de parole disponibles NIT à chaque interface de la couche protocolaire donnée. Ainsi, par multiplication, les moyens de calcul délivrent la charge admissible totale : C = N_{I} x N_{A}, dans le cas d'une charge en termes de nombre d'appels, ou C = N_{I} x N_{IT}, dans le cas d'une charge en termes de nombre d'intervalles de temps de parole.

Comme présenté sur l'organigramme simplifié de la figure 2, dans un mode de réalisation particulier, le procédé de l'invention comprend les étapes suivantes :
- transcodage (21) de chaque base de données de configuration 2₁ à 2_{N} en une base de données transcodée associée 4₁ à 4_{N} ;
- intégration (22) d'une ou plusieurs bases de données transcodées 4₁ à 4_{N}, de façon à créer la base de données de gestion et/ou de maintenance 6 ;
- extraction et présentation (23), selon au moins un type d'information descriptive prédéterminé, de certaines des données stockées dans la base de données de gestion et/ou de maintenance 6.

Il est clair que de nombreux autres modes de réalisation de l'invention peuvent être envisagés. On peut notamment prévoir que les moyens 3 et 5 (ou les étapes 21 et 22) de transcodage et d'intégration soient combiné(e)s et génèrent directement la base de données de gestion et/ou de maintenance 6 à partir des bases de données de configuration 2₁ à 2_{N}. Cette variante se traduit par l'absence de bases de données transcodées 4₁ à 4_{N}.

## Revendications

1. Système de génération et d'exploitation automatique d'une base de données de gestion et/ou de maintenance (6) d'un réseau de télécommunication, ledit réseau comprenant une pluralité de machines (1₁ à 1_{N} ; M1 à M7) ayant chacune une interface de signalisation CCITT n° 7, chaque machine étant associée à une base de données de configuration (2₁ à 2_{N}) stockant, selon un formalisme spécifique, des données correspondant à des informations descriptives de ladite machine, à savoir notamment sa topologie et/ou son architecture CCITT n° 7 et/ou les protocoles qu'elle utilise et/ou l'état des liens qu'elle gère et/ou les ressources qu'elle utilise,
caractérisé en ce qu'il comprend :
- des moyens (3, 5) de transcodage et d'intégration d'au moins une des bases de données de configuration (2₁ à 2_{N}), de façon à créer ladite base de données de gestion et/ou de maintenance (6), lesdits moyens (3) de transcodage permettant de transformer lesdites données stockées selon un formalisme spécifique en des données correspondant également aux informations descriptives de la machine mais disponibles selon un formalisme générique prédéterminé, et lesdits moyens (5) d'intégration permettant de regrouper, selon un motif élémentaire de description de réseau, au moins certaines desdites données disponibles selon un formalisme générique prédéterminé ;
- des moyens (7) d'extraction et de présentation, selon au moins un type d'information descriptive prédéterminé, de certaines des données stockées dans ladite base de données de gestion et/ou de maintenance (6).

2. Système selon la revendication 1, caractérisé en ce qu'il comprend en outre une base de données transcodée (4₁ à 4_{N}) associée à chaque base de données de configuration (2₁ à 2_{N}) et stockant lesdites données disponibles selon le formalisme générique prédéterminé,
lesdits moyens (3) de transcodage permettant le transcodage de chaque base de données de configuration en sa base de données transcodée associée,
lesdits moyens (4) d'intégration permettant l'intégration d'au moins une des bases de données transcodées, en regroupant, selon ledit motif élémentaire de description de réseau, au moins certaines des données disponibles selon un formalisme générique prédéterminé, de façon à créer ladite base de données de gestion et/ou de maintenance (6).

3. Système selon l'une quelconque des revendications 1 et 2, caractérisé en ce que ledit motif élémentaire de description de réseau correspond à la définition d'une machine d'origine et d'une machine de destination, et du faisceau qui les relie.

4. Système selon la revendication 3, caractérisé en ce que ledit motif élémentaire de description de réseau correspond en outre à la définition d'au moins une des informations suivantes :
- les caractéristiques de signalisation CCITT n° 7 (couches protocolaires 1 à 3) dudit faisceau qui relie lesdites machines d'origine et de destination ;
- les couches protocolaires 4 et suivantes définies sur chaque intervalle de temps porté par ledit faisceau ;
- l'état des intervalles de temps gérés par lesdites machines d'origine et de destination ;
- les ressources utilisées par lesdites machines d'origine et de destination ;
- les équipements associés auxdites machines d'origine et de destination.

5. Système selon l'une quelconque des revendications 1 à 4, caractérisé en ce que lesdits moyens (7) d'extraction et de présentation comprennent des moyens de présentation des données extraites sous forme de schéma(s) (8₁ à 8_{N} ; fig.3) et/ou de tableau(x) de base, éventuellement combinés entre eux.

6. Système selon la revendication 5, caractérisé en ce que le(s)dit(s) schéma(s) et/ou tableau(x) de base appartien(nen)t au groupe comprenant :
- un schéma et/ou un tableau selon un protocole donné (MTP1, MTP2, MTP3) d'une des couches protocolaires 1, 2 et 3 de la signalisation CCITT n° 7, faisant apparaître la topologie du réseau ;
- un schéma et/ou un tableau selon un protocole donné (SCCP, TCAP, BSS-MAP, MAP/MSC, MAP/SMS, MAP/HLR, MAP/VLR, MAP/EIR, TUP, SSUTR2, ISUP, INAP) d'une des couches protocolaires 4 et suivantes, faisant apparaître les machines du réseau utilisant ledit protocole donné et les faisceaux correspondants;
- un schéma et/ou un tableau des liaisons semi-permanentes du réseau ;
- un schéma et/ou un tableau de réseau entre deux machines données ;
- un schéma et/ou un tableau de réseau des machines connectées à une machine donnée ;
- un schéma et/ou un tableau de réseau par type de machine ;
- un schéma et/ou un tableau de réseau par constructeur ;
- un schéma et/ou un tableau de réseau par ancienneté de machine ;
- un schéma et/ou un tableau de réseau intelligent, faisant apparaître les machines à valeurs ajoutées ;
- un schéma et/ou un tableau de visualisation de trajets de signalisation dans le réseau.

7. Système selon l'une quelconque des revendications 5 et 6, caractérisé en ce que le(s)dit(s) schéma(s) et/ou tableau(x) de base fait(font) en outre apparaître au moins certaines des informations suivantes :
- pour chaque intervalle de temps :
* son numéro logique, et/ou
* le numéro d'identification de la carte contrôlant le lien MIC qui le supporte ;
* un ou plusieurs des protocoles qu'il porte ;
* l'état des équipements qui gèrent ledit intervalle de temps ;
- les machines pourvues d'un dispositif annuleur d'écho ;
- l'état (en panne ou non) de chaque lien MIC.

8. Système selon l'une quelconque des revendications 1 à 7, caractérisé en ce que lesdits moyens (7) d'extraction et de présentation comprennent des moyens de calcul de la charge admissible totale du réseau, en termes de nombre d'appels et/ou en termes de nombre d'intervalles de temps de parole, aux interfaces d'une couche protocolaire donnée, lesdits moyens de calcul extrayant de ladite base de données de gestion et/ou de maintenance (6) le nombre total d'interfaces de ladite couche protocolaire donnée et disposant par ailleurs d'informations quant au nombre d'appels admissibles et/ou quant au nombre d'intervalles de temps de parole disponibles à chaque interface de ladite couche protocolaire donnée.

9. Système selon l'une quelconque des revendications 1 à 8, caractérisé en ce que ledit réseau de télécommunication est un réseau hétérogène interconstructeur, ledit formalisme spécifique selon lequel sont stockées les données de chaque base de données de configuration étant un formalisme spécifique à chaque constructeur.

10. Système selon l'une quelconque des revendications 1 à 9, caractérisé en ce que ledit réseau de télécommunication est un réseau de radiotélécommunication numérique cellulaire.

11. Procédé de génération et d'exploitation automatique d'une base de données de gestion et/ou de maintenance d'un réseau de télécommunication, ledit réseau comprenant une pluralité de machines ayant chacune une interface de signalisation CCITT n° 7, chaque machine étant associée à une base de données de configuration stockant, selon un formalisme spécifique, des données correspondant à des informations descriptives de ladite machine, à savoir notamment sa topologie et/ou son architecture CCITT n° 7 et/ou les protocoles qu'elle utilise et/ou l'état des liens qu'elle gère et/ou les ressources qu'elle utilise,
caractérisé en ce qu'il comprend les étapes suivantes :
- transcodage et intégration (21, 22) d'au moins une des bases de données de configuration, de façon à créer ladite base de données de gestion et/ou de maintenance, ledit transcodage consistant à transformer lesdites données stockées selon un formalisme spécifique en des données correspondant également aux informations descriptives de la machine mais disponibles selon un formalisme générique prédéterminé, et ladite intégration consistant à regrouper, selon un motif élémentaire de description de réseau, au moins certaines desdites données disponibles selon un formalisme générique prédéterminé ;
- extraction et présentation (23), selon au moins un type d'information descriptive prédéterminé, de certaines des données stockées dans ladite base de données de gestion et/ou de maintenance.

12. Procédé selon la revendication 11, caractérisé en ce que ladite étape de transcodage et d'intégration (21, 22) comprend elle-même les étapes suivantes :
- transcodage (21) de chaque base de données de configuration en une base de données transcodée associée, de façon que chaque base de données transcodée stocke lesdites données disponibles selon le formalisme générique prédéterminé ;
- intégration (22) d'au moins une des bases de données transcodées, de façon à créer ladite base de données de gestion et/ou de maintenance, ladite intégration consistant à regrouper, selon ledit motif élémentaire de description de réseau, au moins certaines des données stockées dans au moins une des bases de données transcodées.
